# EUROPÄISCHE PATENTSCHRIFT

(11) **EP 2 985 477 B1**
(45) Veröffentlichungstag und Bekanntmachung des Hinweises auf die Patenterteilung: **17.07.2019**
(21) Anmeldenummer: 15401082.1
(22) Anmeldetag: 04.08.2015
(51) Int. Cl.: F16B 37/08, E03D 11/14

(54) **BEFESTIGUNGSVORRICHTUNG UND BEFESTIGUNGSANORDNUNG, INSBESONDERE ZUR BEFESTIGUNG EINES SANITÄROBJEKTS**
FASTENING DEVICE AND FASTENING ASSEMBLY, IN PARTICULAR FOR FASTENING A SANITARY OBJECT
DISPOSITIF DE FIXATION ET SYSTEME DE FIXATION EN PARTICULIER DESTINE A FIXER UN OBJET SANITAIRE

(30) Priorität: 14.08.2014 DE 102014111603
(43) Veröffentlichungstag der Anmeldung: 17.02.2016
(73) Patentinhaber: fischerwerke GmbH & Co. KG, 72178 Waldachtal (DE)
(72) Erfinder: Miotto, Moreno, 35028 Piove di Sacco Italien (IT); Martini, Michele, 30038 Spinea (Venezia) Italien (IT)

(56) Entgegenhaltungen:
- EP-A1- 2 299 011
- DE-A1- 4 403 974
- US-A- 2 814 324
- US-A- 5 760 338

## Beschreibung

Die Erfindung betrifft eine Befestigungsvorrichtung, insbesondere zur Befestigung eines Sanitärobjekts, mit den Merkmalen des Oberbegriffs des Anspruchs 1 sowie eine hiermit erstellte Befestigungsanordnung mit den Merkmalen des Oberbegriffs des Anspruchs 14.

Aus der Druckschrift DE 9114083 U1 ist eine Befestigungsvorrichtung zum Befestigen eines Sanitärobjekts, beispielsweise eines Waschtisches, bekannt mit einem Grundkörper aus Kunststoff, der einen Aufnahmekanal für eine Gewindestange aufweist. Im Aufnahmekanal sind einstückig elastische Zungen mit Rastelementen angeordnet, die als Halteelemente wirken. Die Gewindestange ist der freistehende Teil einer Stockschraube, die in einer Wand befestigt ist. Das Sanitärobjekt weist mindestens ein Durchgangsloch auf, mit dem es bei der Montage an der Wand über die Gewindestange gestülpt wird. Danach wird der Grundkörper auf die Gewindestange geschoben, wobei die Rastelemente in das Gewinde einrasten. Der Grundkörper weist einen Anlageflansch auf, der das Sanitärobjekt auf einer der Wand abgewandten Rückseite hält. Der Grundkörper dient einer provisorischen Befestigung des Sanitärobjekts. Für die endgültige Befestigung wird eine Mutter auf die Gewindestange aufgeschraubt, mit der der Grundkörper gegen das Sanitärobjekt und dieses wiederum gegen die Wand gespannt wird. Zur Demontage müssen die Mutter und der Grundkörper abgeschraubt werden. Dies erfordert einerseits Zeit. Andererseits besteht die Problematik bei einem hängend montierten Sanitärobjekt, dass dieses bei der Demontage gegen Herunterfallen gesichert werden muss, und gleichzeitig Mutter und Grundkörper abgeschraubt werden müssen. Hierzu sind vor allem bei größeren Sanitärobjekten mehrere Personen erforderlich.

Aus der Befestigungstechnik sind außerdem Schnellspannmuttern bekannt. So zeigt beispielsweise die Druckschrift EP 0855526 B1 eine derartige Schnellspannmutter mit einem Grundkörper, an dem außen Schlüsselflächen angeordnet sind, und der von einem Aufnahmekanal für eine Gewindestange durchsetzt ist. Im Aufnahmekanal sind außerdem federnd zwei Halteelemente gehalten, die über Innengewindeflächen rastend mit einer Gewindestange in Eingriff kommen, wenn diese in den Aufnahmekanal geschoben wird. Die Halteelemente bewegen sich bei der Rastbewegung translatorisch entlang einer konischen Gleitfläche. Die Schnellspannmutter kann nur in einer Richtung aufgeschoben werden, in entgegengesetzter Richtung muss sie abgeschraubt werden.

Aus der Druckschrift EP 2450492 A1 ist eine Befestigungsvorrichtung bekannt, mit der eine Gewindestange in einer Wand befestigt werden kann. Das der Wand abgewandte Ende der Gewindestange dient insbesondere der Befestigung einer Klosettschüssel oder eines Urinals. Die Befestigungsvorrichtung, die in der Wand eingelassen wird, weist einen Aufnahmekanal für die Gewindestange auf und ein Haltelement in diesem Aufnahmekanal, das drehbar über einen Zapfen in einer Lageröffnung eines Grundkörpers gelagert ist. Das Halteelement weist einen Zahnungsabschnitt auf, der in das Gewinde der Gewindestange eingreift. Die Drehachse und der Zahnungsabschnitt sind geometrisch so angeordnet, dass der Grundkörper mit dem Halteelement ein Gesperre bildet. Die Gewindestange kann daher zwar eingeführt, aber nicht wieder herausgezogen werden. Dies kann auch als Einrasten bezeichnet werden. Ein Herausziehen der Gewindestange ist nur möglich, wenn das Halteelement, das sich stabartig quer zur Gewindestange im Grundkörper erstreckt, mittels eines Werkzeugs um die Drehachse gekippt wird. Um außer Eingriff der Gewindestange zu gelangen, muss das Halteelement dazu recht weit gekippt und die Gewindestange gleichzeitig eine relativ große Strecke in den Aufnahmekanal hineingeschoben werden, bevor sie herausgezogen werden kann. Umgekehrt kann die Gewindestange beim Einführen recht weit wieder in umgekehrte Richtung gezogen werden, bis das Halteelement greift. Beim Herausziehen muss das Halteelement gekippt gehalten werden, da es sonst durch eine Feder wieder in die Raststellung bewegt wird.

Die Druckschrift US 5,760,338 zeigt eine Befestigungsvorrichtung entsprechend dem Oberbegriff von Anspruch 1, die jedoch nicht zum Aufnehmen hoher Lasten, wie sie im Sanitärbereich auftreten, geeignet ist.

Aufgabe der Erfindung ist es, eine Befestigungsvorrichtung und eine hiermit herstellbare Befestigungsanordnung zu schaffen, die sowohl leicht montierbar als auch demontierbar ist. Bei der Montage soll das Sanitärobjekt möglichst nahe an der Wand provisorisch gehalten werden. Auch bei der Demontage soll das Sanitärobjekt vor dem endgültigen Lösen noch gegen Herunterfallen gesichert sein und sich dabei nur geringfügig bewegen, damit nicht der Eindruck entsteht, das Sanitärobjekt würde herunterfallen.

Diese Aufgabe wird erfindungsgemäß durch die Befestigungsvorrichtung mit den Merkmalen des Anspruchs 1 sowie mit einer Befestigungsanordnung mit den Merkmalen des Anspruchs 13 gelöst. Die erfindungsgemäße Befestigungsvorrichtung dient zur Befestigung eines Objekts, insbesondere Sanitärobjekts aus Keramik, wie ein Waschtisch, eine Toilettenschüssel, ein Urinal oder ein Bidet. Sie weist einen Grundkörper auf, der insbesondere aus Kunststoff und vorzugsweise einstückig ist, mit einem Aufnahmekanal für eine Gewindestange, der sich entlang einer Längsachse erstreckt. Der Aufnahmekanal ist vorzugsweise seitlich geschlossen, könnte aber auch eine seitliche Öffnung aufweisen. Im Aufnahmekanal ist mindestens ein gegenüber dem Grundkörper bewegliches Halteelement angeordnet. Das Halteelement ist vorzugsweise, jedoch nicht zwingend, ein gegenüber dem Grundkörper separates Bauteil, ist also nicht einstückig mit dem Grundkörper. Das Haltelement weist Vorsprünge zum Halten einer Gewindestange auf und ist derart beweglich gehalten, dass es zwischen einer Raststellung und einer Freigabestellung hin und her bewegbar ist. In der Raststellung ist das Einführen einer korrespondierenden Gewindestange in einer Einführrichtung möglich, während eine Bewegung entgegen der Einführrichtung, möglicherweise nach einem kurzen Weg, blockiert wird. Die Einführrichtung verläuft insbesondere parallel zur Längsachse des Aufnahmekanals. Mit einer "korrespondierenden Gewindestange" ist eine Gewindestange gemeint, die bezüglich ihres Außendurchmessers und ihrer Gewindegeometrie auf den Grundkörper und das Halteelement abgestimmt ist. Die korrespondierende Gewindestange ergänzt die erfindungsgemäße Befestigungsvorrichtung zur erfindungsgemäßen Befestigungsanordnung. Sie weist insbesondere ein Maschinengewinde, insbesondere ein metrisches Gewinde oder Inch-Gewinde, auf. In der Freigabestellung ist eine Bewegung der korrespondierenden Gewindestange in Einführrichtung und entgegen der Einführrichtung möglich. Die Freigabestellung muss sich nicht auf eine einzige Position des Halteelements beschränken, sondern kann verschiedene Positionen innerhalb des Bewegungsspielraums des Halteelements umfassen. Anders ausgedrückt muss das Haltelement zum Erreichen der Freigabestellung mindestens soweit geöffnet werden können, dass die Gewindestange entgegen der Einführrichtung entnehmbar ist. Sie kann aber innerhalb der Freigabestellung auch noch weiter geöffnet werden. Dasselbe gilt für die Raststellung: Auch hier sind verschiedene Positionen innerhalb des Bewegungsspielraums des Halteelements möglich, solange in der jeweiligen Position noch ein rastender Eingriff in das Gewinde der Gewindestange möglich ist. Genau betrachtet bewegt sich das Halteelement bei einer Einrastbewegung aus der Raststellung in eine Zwischenposition, in der eine Bewegung der Gewindestange in Einführrichtung möglich ist, um dann, insbesondere federnd, in die Raststellung zurückzukehren. Durch die Freigabestellung kann die Gewindestange aus der Befestigungsvorrichtung entnommen werden, ohne dass der Grundkörper gegenüber der Gewindestange gedreht werden muss, was die Demontage gegenüber dem aus der Druckschrift DE 9114083 U1 bekannten Stand der Technik erleichtert.

Kennzeichnend für die erfindungsgemäße Befestigungsvorrichtung ist, dass das Halteelement durch eine kombinierte translatorische und rotatorische Bewegung zwischen der Raststellung und der Freigabestellung bewegbar ist. Insbesondere erfolgt die Bewegung von der Raststellung in die Freigabestellung zunächst im Wesentlichen translatorisch und dann im Wesentlichen rotatorisch. Das Element gleitet also weder rein linear entlang einer Schräge, noch wird es nur um eine Drehachse geschwenkt. Es hat sich gezeigt, dass durch eine kombinierte translatorische und rotatorische Bewegung kurze Wege beim Einrasten und Freigeben erreicht werden. Beim Einrasten ist insbesondere der translatorische Anteil günstig, wenn das Halteelement entlang einer zur Einführrichtung schrägen Linie bewegt wird, da mit einem entsprechend steilen Winkel ein günstiges Verhältnis zwischen dem Bewegungsanteil in Einführrichtung und dem Bewegungsanteil senkrecht hierzu erreicht wird. Durch den rotatorischen Anteil wird das Halteelement insbesondere über einen Betätigungshebel einfach bedienbar. Darüber hinaus kann das Halteelement bei der Bewegung in die Freigabestellung in dem Moment, wo kein Eingriff mehr in das Gewinde der Gewindestange stattfindet, rotatorisch ohne großen Bewegungsbedarf so weggekippt werden, dass die Gewindestange selbst bei einer leichten Schrägstellung, wie sie bei der Demontage leicht auftreten kann, nicht mehr in Eingriff mit dem Halteelement gerät. Durch die kurzen Wege, vor allem beim Einrasten, kann bei der Demontage gewährleistet werden, dass sich das zu befestigende Objekt kaum bewegt, wenn es zuvor noch nicht durch das Halteelement gehalten wird. Dies ist insbesondere der Fall, wenn die Gewindestange bei der Montage zusätzlich mit einer Mutter angezogen wird. In diesem Fall wird bei der Demontage erst die Mutter gelöst und das Halteelement, das sich in der Raststellung befindet, rastet wie oben beschrieben durch eine kurze Bewegung ein. Damit kommt dem Bediener beispielsweise bei der Demontage eines Wachbeckens, dieses durch das Lösen der Mutter kaum entgegen. Durch eine einfache, kurze Bewegung kann das Halteelement im weiteren Verlauf der Demontage in die Freigabestellung gebracht und das Sanitärobjekt von der Gewindestange abgezogen werden.

Hierzu weist der Grundkörper eine Gleitfläche für das Halteelement auf mit einem ersten Flächenanteil, der ein translatorisches Gleiten des Halteelements, d. h. die o. g. translatorische Bewegung erlaubt, und einem zweiten Flächenanteil, der ein Gleiten des Halteelements mit einer Kippbewegung und damit die o. g. rotatorische Bewegung erlaubt. Hierdurch wird mit einfachen Mitteln eine gezielte Führung des Halteelements im Sinne der genannten Kombination aus translatorischer und rotatorischer Bewegung erreicht.

In einer bevorzugten Ausführungsform ist am Halteelement ein Betätigungshebel angeordnet, der auf einer der Haltefläche abgewandten Seite des Halteelements absteht. Durch den Betätigungshebel ist das Halteelement leicht handhabbar, insbesondere auch ohne Werkzeug. Insbesondere ermöglicht ein längerer Betätigungshebel die Nutzung von Hebelkräften zur Bewegung des Halteelements. Der Betätigungshebel steht insbesondere im Wesentlichen senkrecht zur Haltefläche des Halteelements, wobei sich "senkrecht" hier auf eine Längserstreckung der Haltefläche bezieht, die in der Raststellung parallel zur Längsachse der Gewindestange liegt. Anders ausgedrückt steht der Betätigungshebel in der Raststellung im Wesentlichen senkrecht zur Einführrichtung.

Vorzugsweise weist die erfindungsgemäße Befestigungsvorrichtung eine Halteeinrichtung auf, durch die das Halteelement lösbar in der Freigabestellung gehalten werden kann. "Lösbar gehalten" meint hier, dass das Halteelement ohne Einwirkung von außen in der Freigabestellung verbleibt, jedoch reversibel wieder aus dieser Stellung gelöst werden kann, insbesondere ohne Verwendung eines Werkzeugs, wie dies bei einer Vorrichtung gemäß der Druckschrift EP 2450492 A1 notwendig ist. Bei der Demontage kann das Halteelement, beispielsweise durch eine kurze, einhändige Bewegung, in die Freigabestellung verbracht werden, während beispielsweise das befestigte Sanitärobjekt mit dem Körper der montierenden Person gegen die Wand gehalten wird. Das Halteelement braucht dann nicht weiter gehalten werden. Dadurch kann der Bediener das Sanitärobjekt mit beiden Händen abnehmen, wodurch die Gefahr eines Herunterfallens gering ist. Insbesondere kann der Demontagevorgang auch bei größeren Sanitärobjekten von einer einzelnen Person vorgenommen werden.

Vorzugsweise ist die Halteeinrichtung eine Schnappeinrichtung. Gegenüber anderen denkbaren Halteeinrichtungen, beispielsweise mit einem zusätzlichen beweglichen Riegel, einem Schraub- oder Bajonettverschluss, hat eine Schnappeinrichtung den Vorteil eines einfachen Aufbaus und einer einfachen Bedienbarkeit. Vorzugsweise ist die Halteeinrichtung, insbesondere als Schnappeinrichtung, am Betätigungshebel angeordnet.

Vorzugsweise sind im Aufnahmekanal zwei bezüglich der Längsachse des Aufnahmekanals gegenüberliegend angeordnete Halteelemente angeordnet. Gegenüber einem einzelnen Halteelement hat dies den Vorteil, dass sich die Wege der beiden Halteelemente zum Einrasten und Freigeben addieren, so dass das einzelne Halteelement nur gering bewegt werden muss. Außerdem erlaubt dies einen symmetrischen Aufbau und damit eine gleichmäßige Verteilung der auftretenden Kräfte, was sich günstig auf die Stabilität und Tragfähigkeit der Befestigungsvorrichtung auswirkt.

In einer bevorzugten Ausführungsform weist die Haltefläche die Form eines Innengewindesegments auf, wobei es sich bei dem Segment um ein Umfangsteil handelt. Dies ermöglicht eine passgenaue Anlage und somit einen guten Formschluss des Halteelements mit der korrespondierenden Gewindestange und somit insbesondere auch bei relativ kleiner Ausführung in Kunststoff hohe Haltewerte.

Vorzugsweise ist das Halteelement über ein Federelement mit dem Grundkörper verbunden. Insbesondere können das Federelement und die Halteelemente einstückig sein. Durch das Federelement wird eine Rückstellbewegung beim Einrasten in der Raststellung erreicht. Durch die Verbindung mit dem Grundkörper wird erreicht, dass die Federelemente nicht zusätzlich gegen Herausfallen gesichert werden müssen. Durch eine Anordnung zwischen Grundkörper und Halteelement wird ein einfacher Aufbau mit guter Federwirkung erzielt. Alternativ hierzu könnten beispielsweise auch zwischen zwei gegenüberliegenden Halteelementen Zugfederelemente angeordnet sein.

Bevorzugt ist, dass das Federelement über eine Klipsverbindung mit dem Grundkörper verbunden ist. Hierdurch wird eine einfache Montage der Halteelemente im Grundkörper möglich, bei gleichzeitig geringer Anzahl von Bauteilen.

In einer bevorzugten Ausführungsform ist am Grundkörper eine zur Längsachse im Wesentlichen senkrechte Widerlagerfläche für eine Unterlegscheibe angeordnet. Diese Widerlagerfläche ist so angeordnet, dass sie das Halteelement in der Raststellung axial in Einführrichtung überragt. Wird nach einem provisorischen Einführen der Gewindestange in den Aufnahmekanal eine Unterlegscheibe und eine Mutter auf der Gewindestange montiert, so kann sich die Unterlegscheibe durch diese Anordnung an der Widerlagerfläche abstützen. Durch ein Anziehen der Mutter wird das Halteelement entlastet, weil nun die Kräfte über die Mutter und die Widerlagerfläche in den Grundkörper eingeleitet werden. Das Halteelement kann damit so ausgelegt werden, dass es die Kräfte während der Montage hält, während die Mutter deutlich höhere Kräfte im Gebrauchszustand des Objekts tragen kann. Erst bei einer Demontage rastet durch das Lösen der Mutter das Halteelement wieder in die Gewindestange ein. Um zu verhindern, dass das Halteelement im fertig montierten Zustand unbeabsichtigt in die Freigabestellung verbracht wird, sieht die Erfindung vor, dass außerdem das Halteelement in einer Übergangsposition zwischen der Raststellung und der Freigabestellung die Widerlagerfläche axial in Einführrichtung überragt. Liegt eine Unterlegscheibe an, so verhindert diese eine Bewegung in die Übergangsposition. Somit wird verhindert, dass beim Lösen der Mutter des befestigte Objekt ohne Halt bleibt und sich unkontrolliert löst. Das Verbleiben in der Rastposition erzwingt ein Einrasten des Halteelements beim Lösen der Mutter.

Vorzugsweise überragt außerdem das Halteelement die Widerlagerfläche in der Freigabestellung axial in Einführrichtung. Wird eine Unterlegscheibe und eine Mutter bei der Freigabestellung montiert, so fällt dem Bediener sofort auf, dass die Unterlegscheibe nicht an der Widerlagerfläche anliegt. Somit kann verhindert werden, dass sich beim Lösen der Mutter das Halteelement nicht in der Rastposition befindet, mit den oben genannten Vorteilen. Insbesondere können das Halteelement und der Grundkörper so gestaltet werden, dass sich durch das Anziehen der Mutter das Halteelement automatisch in die Raststellung bewegt. Mit der Freigabestellung ist hier wiederum jegliche Position gemeint, in der eine Bewegung der Gewindestange entgegen der Einführrichtung ermöglicht wird, unabhängig davon, ob in dieser das Halteelement von der Raststellung aus noch weiter bewegt werden kann.

Um die Montage einer erfindungsgemäßen Befestigungsanordnung, beispielsweise zur Befestigung eines Waschtisches an einer Wand, zu vereinfachen, schlägt die Erfindung vor, dass am Grundkörper eine Fixiereinrichtung angeordnet ist, mit der die Befestigungsvorrichtung an einem Objekt mit einem Durchgangsloch festlegbar ist, derart, dass es das Durchgangsloch hintergreift. Hierdurch kann vor der eigentlichen Befestigung an der Wand der Grundkörper an seiner späteren Position am zu befestigenden Objekt vormontiert werden. Das Objekt kann dann samt dem Grundkörper und dem Halteelement auf eine aus der Wand ragende Gewindestange aufgeschoben werden und es kommt in der Folge durch das Halteelement unmittelbar zu einer provisorischen Befestigung mittels Einrasten. Weder muss der Grundkörper beim Aufschieben gehalten werden, noch muss er nach dem Aufschieben auf die Gewindestange gefügt werden, während gleichzeitig das Objekt gegen Herunterfallen gesichert wird. Die Fixiereinrichtung ist insbesondere ein vom Grundkörper separates Bauteil, das insbesondere über eine Rastverbindung mit dem Grundkörper verbindbar ist. Die Fixiereinrichtung ist insbesondere trichterförmig mit einem Flansch, der als Hintergreifelement das Durchgangsloch eines Objekts hintergreifen kann. Das Hintergreifelement ist also insbesondere an einem dem Grundkörper abgewandten Ende der Fixiereinrichtung angeordnet. Das Hintergreifelement ist insbesondere dünnwandig, um auch dann zum Einsatz kommen zu können, wenn das Hintergreifelement das Objekt im Bereich einer Anlagefläche des Objekts hintergreifen muss, wenn das Durchgangsloch des Objekts also nicht in eine Nische oder dergleichen mündet. Mit "dünnwandig" ist hier eine Dicke von weniger als 1 mm, insbesondere weniger als 0,6 mm, gemeint. Das Fixierelement ist insbesondere trichterförmig mit einem über den Umfang geschlossenen Hohlkonus und mit einem ringförmigen, dünnwandigen Flansch als Hintergreifelement, der über den Umfang verteilt mindestens zwei radiale Einschnitte hat. Durch den geschlossenen Umfang einerseits wird sowohl ein fester Halt des Grundkörpers am Objekt durch die Fixiereinrichtung, als auch eine gute Führung der Gewindestange beim Bewegen durch das Durchgangsloch erreicht. Der dünne, am Umfang unterbrochene Flansch ermöglicht andererseits sowohl ein Hintergreifen, selbst wenn hierfür wie oben beschrieben keine Nische vorgesehen ist, als auch ein leichtes radiales Stauchen ohne Aufwerfungen, wenn das Durchgangsloch eng ist. Somit können Durchgangslöcher mit recht großer Durchmessertoleranz abgedeckt werden.

Vorzugsweise ist am Grundkörper um den Aufnahmekanal herum eine gegenüber der Längsachse exzentrische Auflagefläche und Werkzeugangriffsflächen zum Drehen des Grundkörpers um die Längsachse angeordnet. Die Auflagefläche kommt insbesondere in einem Durchgangsloch des zu befestigenden Objekts zur Auflage, könnten jedoch auch davon entfernt anliegen. Durch die Exzentrizität kann eine Lage der Längsachse relativ zum Objekt mittels eines Werkzeugs justiert werden. Durch Drehen des Grundkörpers können so Lagetoleranzen der Gewindestange und Bauteiltoleranzen des Objekts ausgeglichen werden.

Eine bevorzugte Befestigungsanordnung sieht vor, dass die erfindungsgemäße Befestigungsvorrichtung mit einer korrespondierenden Gewindestange kombiniert wird und auf der Gewindestange eine Mutter und eine Unterlegscheibe angeordnet sind. Die Unterlegscheibe liegt an dem Grundkörper und die Mutter an der Unterlegscheibe an. Um zu verhindern, dass im fertig montierten Zustand das Halteelement versehentlich in die Freigabestellung bewegt wird, schlägt die Erfindung vor, dass die Unterlegscheibe eine Bewegung des Halteelements von der Raststellung in die Freigabestellung blockiert. Wird die Mutter demontiert, so ist damit gewährleistet, dass das Halteelement durch Einrasten ein Herunterfallen des Objekts verhindert.

Vorzugsweise umfasst die erfindungsgemäße Befestigungsanordnung ein Sanitärobjekt, insbesondere aus Keramik, das mittels einer oder mehrerer Gewindestangen, die sich von einer Wand erstrecken, und einer erfindungsgemäßen Befestigungsvorrichtung an der Wand befestigt ist.

Die Erfindung wird nachfolgend anhand eines Ausführungsbeispiels erläutert.

Es zeigen:
- Figur 1: die erfindungsgemäße Befestigungsvorrichtung in einer perspektivischen Zusammenbaudarstellung;
- Figur 2: dieselbe Befestigungsvorrichtung in einer perspektivischen Explosionsdarstellung;
- Figur 3: dieselbe Befestigungsvorrichtung als Teil einer erfindungsgemäßen Befestigungsanordnung in einer perspektivischen Schnittdarstellung;
- Figur 4: einen Längsschnitt derselben Befestigungsanordnung beim Einführen der Gewindestange;
- Figur 5: einen Längsschnitt derselben Befestigungsanordnung vor dem Anziehen der Mutter; und
- Figur 6: einen Längsschnitt derselben Befestigungsanordnung während der Demontage.

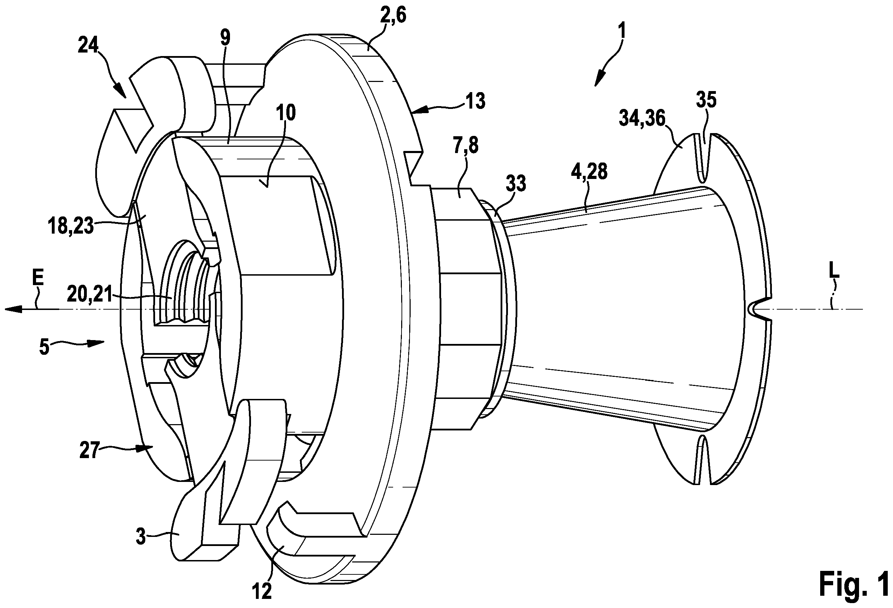

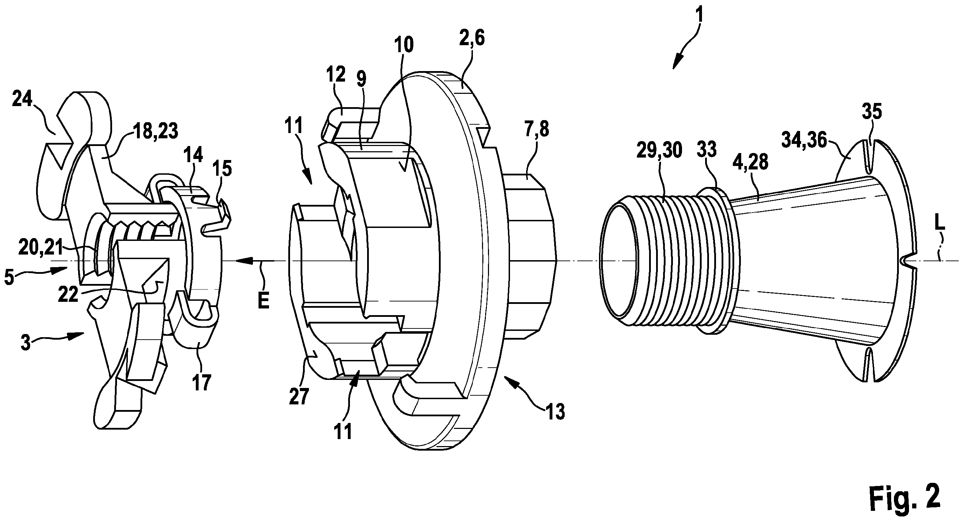

Die in den Figuren 1 und 2 dargestellte Befestigungsvorrichtung 1 ist aus Kunststoff und besteht aus drei Einzelteilen: einem Grundkörper 2, einem Haltekörper 3 und einer Fixiereinrichtung 4.

Der Grundkörper 2 weist einen Aufnahmekanal 5 auf, der den Grundkörper 2 vollständig entlang einer Längsachse L durchsetzt. Parallel zur Längsachse L verläuft die Einführrichtung E. Im Weiteren beziehen sich die Begriffe "vorne", "mittig" und "hinten" stets auf die Einführrichtung E. "Zur Seite" oder "seitlich" bezieht sich entsprechend auf eine radiale, das heißt senkrecht zur Einführrichtung E stehende Richtung. Mittig am Grundkörper 2 ist eine flanschartige Ringscheibe 6 angeordnet. Von dieser Ringscheibe 6 erstreckt sich nach hinten eine Auflagebuchse 7 mit einer umlaufenden exzentrischen Auflagefläche 8. Nach vorne erstreckt sich von der Ringscheibe 6 aus eine Lagerbuchse 9. Außen ist die Lagerbuchse 9 zylindrisch mit zwei parallelen, gegenüberliegenden Abflachungen als Werkzeugangriffsflächen 10. Um 90 Grad versetzt hierzu weist die Lagerbuchse 9 zwei gegenüberliegende, in der Seitenansicht T-förmige Ausschnitte 11 auf. Der Aufnahmekanal 5 verengt sich im Bereich der Lagerbuchse 8. In Flucht mit den T-förmigen Ausschnitten 11 ist an der Ringscheibe 6 ein nach vorne ragender Haken 12 mit einer zur Längsachse L gerichteten Spitze angeordnet. Nach hinten gewandt bildet die Ringscheibe 6 eine Übertragungsfläche 13, die senkrecht zur Längsachse L steht.

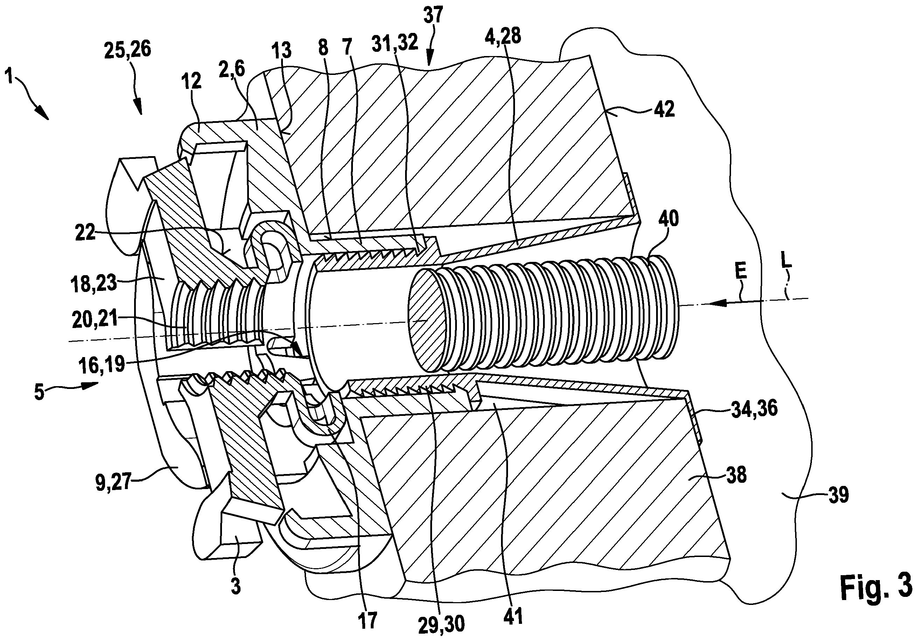

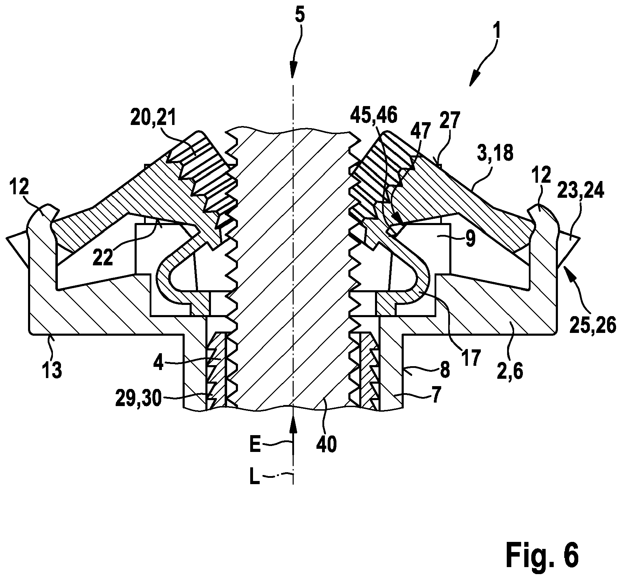

Der Haltekörper 3 weist einen Haltering 14 mit zwei gegenüberliegenden nach hinten ragenden Rastnasen 15 auf, die im Inneren des Grundkörpers 2 im zusammengebauten Zustand in Rastvertiefungen 16 eingreifen (siehe Figur 3) und so den Haltekörper 3 im Grundkörper 2 halten. Am Haltering 14 vorne sind über zwei U-förmig gebogene, bandartige Federelemente 17 zwei Halteelemente 18 angeordnet. Über die Federelemente 17, den Haltering 14 und die Rastnasen 15 sind die Halteelemente 18 mit dem Grundkörper 2 verbunden, wobei die Rastnasen 15 mit den Rastvertiefungen 16 eine Klipsverbindung 19 bilden. Die beiden Halteelemente 18 sind seitlich der Längsachse L gegenüberliegend angeordnet. Auf ihren einander zugewandten Seiten bilden sie Halteflächen 20, die die Form von Innengewindesegmenten mit gewindeförmigen Vorsprüngen 21 haben. An ihren seitlichen Außenflächen weisen die Halteelemente 18 jeweils in etwa konische, schräg nach vorne gerichtete Lagerflächen 22 auf. Seitlich nach außen steht von den Halteelementen 18 am vorderen Ende jeweils ein Betätigungshebel 23 ab. Die Betätigungshebel 23 stehen in der in den Figuren 1 bis 5 dargestellten Raststellung der Halteelemente 18 senkrecht zur Längsachse L. Am äußeren Ende weisen die Betätigungshebel 23 rechteckige Aussparungen 24 auf. Die Aussparungen 24 bilden zusammen mit den Haken 12 am Grundkörper 2 eine Halteeinrichtung 25 in Form einer Schnappeinrichtung 26. Dies wird aus Figur 6 deutlich und im Weiteren noch erläutert. Der Haltekörper 3 ist so im Grundkörper 2 gehalten, dass sich die Halteelemente 18 im Aufnahmekanal 5 befinden. Die beiden Betätigungshebel 23 ragen durch die T-förmigen Ausschnitte 11 aus der Lagerbuchse 9. In der Raststellung überragt der Grundköper 2 mit einer an der vorderen Stirnfläche der Lagerbuchse 9 angeordneten Widerlagerfläche 27 axial, also nach vorne, die Halteelemente 18. Die Widerlagerfläche 27 steht senkrecht zur Längsachse L.

Die Fixiereinrichtung 4 ist trichterförmig mit einem am Umfang geschlossenen Hohlkonus 28, an den sich vorne ein Hohlzylinder 29 mit mehreren hintereinander angeordneten und sich in Umfangsrichtung erstreckenden Rastvorsprüngen 30 anschließt. Die Rastvorsprünge 30 können im Rahmen einer Vormontage, auf die noch eingegangen wird, mit einer in der Auflagebuchse 7 innen angeordneten, umlaufenden Rastrippe 31 in Verbindung gebracht werden, in dem der Hohlzylinder 29 von hinten in den Aufnahmekanal 5 gesteckt wird. Die Rastvorsprünge 30 bilden zusammen mit der Rastrippe 31 eine Rastverbindung 32. Zwischen Hohlkonus 28 und Hohlzylinder 29 ist außen ein umlaufender Anlagebund 33 angeordnet, der die Einsteckbewegung begrenzt. Am hinteren Ende schließt sich an den Hohlkonus 28 ein umlaufender dünnwandiger Flansch 34 an, der über den Umfang verteilt vier radiale Einschnitte 35 aufweist, die bis zum Hohlkonus 28 reichen. Der Flansch 34 bildet ein Hintergreifelement 36.

In Figur 3 ist eine fertig montierte erfindungsgemäße Befestigungsanordnung 37 dargestellt. Die Befestigungsanordnung 37 dient der Befestigung eines Sanitärobjekts 38, hier ein Waschtisch, an einer Wand 39. Von der Wand 39 ragt eine mit der Befestigungsvorrichtung 1 korrespondierende Gewindestange 40 ab, wobei die Verankerung der Gewindestange 40 in der Wand 39 hier nicht näher dargestellt ist, weil es hierauf in diesem Zusammenhang nicht ankommt. Von dem Sanitärobjekt 38 ist nur ein kleiner wandartiger Ausschnitt in einem der Wand 39 zugewandten Bereich dargestellt, der üblicherweise bei einem Waschtisch von unten zugänglich ist. Das Sanitärobjekt 38 weist in diesem Bereich ein kreisförmiges Durchgangsloch 41 auf.

Im Rahmen einer Vormontage wird, beispielsweise im Herstellerwerk des Sanitärobjekts 38 oder in dem betreffenden Raum, zunächst die Befestigungsvorrichtung 1 an dem Sanitärobjekt 28 fixiert, also festgelegt. Dazu wird der Grundkörper 2 mit der Auflagebuchse 7 in das Durchgangsloch 41 gesteckt und von der anderen Seite mit der Fixiereinrichtung 4 durch Einstecken des Hohlzylinders 29 in die Auflagebuchse 7 verbunden. Mit dem Flansch 34 hintergreift die Fixiereinrichtung 4 das Durchgangsloch 41 des Sanitärobjekts 38. Ist das Durchgangsloch 41 etwas enger als der Hohlkonus 28 breit ist, so kann sich die Fixiereinrichtung 4 etwas radial stauchen. Dabei sorgen die Einschnitte 35 dafür, dass es zu keinen Aufwerfungen kommt. Der Flansch 34 liegt eng an einer Anlagefläche 42 des Sanitärobjekts 38 an und trägt kaum auf, so dass das Sanitärobjekt 38 im fertig montierten Zustand im Rahmen der üblichen Toleranzen bündig an der Wand 39 zur Anlage kommt, auch wenn, so wie hier dargestellt, keine Nische im Bereich der Anlagefläche 42 ausgebildet ist.

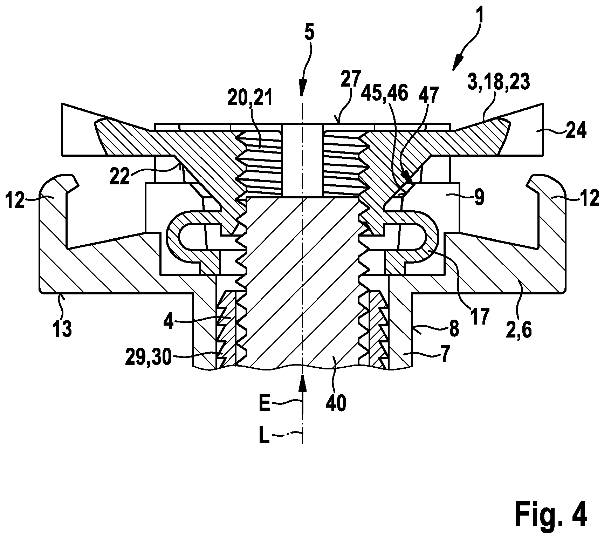

Nach der Vormontage kann das Sanitärobjekt 38 samt der Befestigungsvorrichtung 1 über die Gewindestange 40 geschoben und mit einer Unterlegscheibe 43 und einer Mutter 44 endgültig fixiert werden. Dieser Vorgang und eine mögliche Demontage wird im Folgenden anhand der Figuren 4 bis 6 beschrieben, wobei bei einem Sanitärobjekt 38 üblicherweise zwei Befestigungsanordnungen 37 parallel angeordnet sind. Der Übersicht halber ist nur eine dieser Befestigungsanordnungen 37 dargestellt und beschrieben. Beim Überschieben der Befestigungsvorrichtung 1 über die Gewindestange 40 wird die Gewindestange 40 in den Aufnahmekanal 5 eingeschoben. In der in Figur 4 dargestellten Raststellung der Halteelemente 18 verengen diese den Aufnahmekanal 5 derart, dass die Gewindestange 40 die Halteelemente 18 seitlich verdrängen muss, um eingeschoben werden zu können. Aufgrund der Federelemente 17 und des Bewegungsspielraums der Halteelemente 18 innerhalb des Grundkörpers 2 weichen die Halteelemente 18 dabei seitlich aus. Sie machen dabei eine komplexe translatorische und rotatorische Bewegung, die als Einrastbewegungen bezeichnet werden können. Diese Einrastbewegungen finden mehrfach entsprechend der Gewindegänge statt, wobei die Halteelemente 18 jeweils nur sehr kurze Wege machen und aufgrund der Rückstellwirkung der Federelemente 17 in die dargestellte Ausgangsposition zurückkehren.

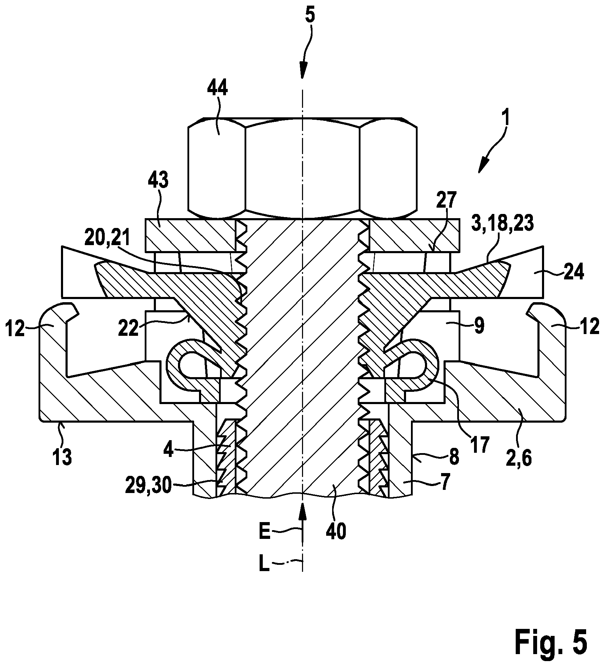

Ist das Sanitärobjekt 38 vollständig auf die Gewindestange 40 geschoben, so kann es losgelassen werden. Die Befestigungsvorrichtung 1 sorgt für einen provisorischen Halt, der es dem Monteur ermöglicht, mit beiden Händen die Unterlegscheibe 43 und die Mutter 4 zu montieren, ohne ein Herunterfallen des Sanitärobjekts 38 zu riskieren. Durch das Loslassen des Sanitärobjekts 38 übt dieses über die Übertragungsfläche 13 eine Druckkraft auf den Grundkörper 2 aus, so dass sich dieser in Einführrichtung E auf die Halteelemente 18 zubewegt, die sich in Formschluss mit der Gewindestange 40 befinden. Hierdurch kommen die Halteelemente 18 mit ihren Lagerflächen 22 in Anlage mit einer schräg zur Längsachse L im Aufnahmekanal 5 angeordneten konischen Gleitfläche 45 des Grundkörpers 2 in Kontakt. Die Gleitflächen 45 und die Lagerflächen 22 wirken als Linearführung, die bewirkt, dass die Halteelemente 18 radial zur Längsachse L an die Gewindestange 40 gepresst werden. Die Halteelemente 18 blockieren somit in der beschriebenen Raststellung eine Bewegung der Gewindestange 40 entgegen der Einführrichtung E. Die Gewindestange 40 ragt vorne aus der Befestigungsvorrichtung 1 heraus, so dass die Unterlegscheibe 43 übergestülpt und an der Widerlagerfläche 27 zur Anlage gebracht werden kann. Dann wird die Mutter 44 aufgeschraubt und zunächst von Hand ohne Anziehen zur Anlage an die Unterlegscheibe 43 gebracht. Dieser Zustand ist in Figur 5 dargestellt. In einem Zwischenschritt kann dann durch Drehung des Grundkörpers 2 mittels eines Werkzeugs (nicht dargestellt) an den Werkzeugangriffsflächen 10 die Position des Grundkörpers 2 zur Gewindestange 40 und damit zur Wand 39 justiert werden. Das Sanitärobjekt 38 liegt dabei im Bereich des Durchgangslochs 41 auf der exzentrischen Auflagefläche 8 auf. Durch Anziehen der Mutter 44 wird danach die Gewindestange 40 in Einführrichtung E gezogen, wodurch die Halteelemente 18 sich wieder zurückstellen in die in Figur 4 gezeigte Position. Sie werden dadurch entlastet, bleiben aber in Raststellung, können also jederzeit wieder die beschriebene provisorische Haltefunktion übernehmen.

Soll das Sanitärobjekt 38 demontiert werden, so wird die Mutter 44 gelöst und die Unterlegscheibe 43 entfernt. Dabei braucht das Sanitärobjekt 38 nicht gehalten werden und macht nur einen geringen Weg, da die Halteelemente 18 wie beschrieben wieder in die in Figur 5 dargestellte Position zurückkehren und somit für einen provisorischen Halt sorgen. Statt nun die Befestigungsvorrichtung 1 abschrauben zu müssen, was grundsätzlich auch möglich ist, können die Betätigungshebel 23 einhändig nach hinten gedrückt werden, wie dies in Figur 6 gezeigt ist. Mit der zweiten Hand kann währenddessen das Sanitärobjekt 38 gegen Herunterfallen gesichert werden. Durch das Drücken der Betätigungshebel 23 geraten die Halteelemente 18 in die Freigabestellung, die ein Herausziehen der Gewindestange 40 ermöglicht. Bei der Überführung der Halteelemente 18 von der Raststellung in die Freigabestellung erfolgt eine kombinierte translatorische und rotatorische Bewegung. Die Halteelemente 18 gleiten dabei jeweils entlang der Gleitfläche 45, wobei diese einen ersten konischen Flächenanteil 46 aufweist, der ein translatorisches Gleiten ermöglicht, und einen zweiten Flächenanteil 47, der die Form einer abgerundeten Kante am Rande des ersten Flächenanteils 46 hat, über den das Halteelement 18 mit einer Kippbewegung gleitet. Diese Anordnung erlaubt ein einfaches Auseinanderbewegen und Aufweiten der Halteelemente 18 in die Freigabestellung mit einer kurzen Bewegung.

Die Halteelemente 18 überragen in der Freigabestellung axial die Widerlagerfläche 27. Im fertig montierten Zustand blockiert die Unterlegscheibe 43 eine Bewegung der Halteelemente 18 von der Raststellung in die Freigabestellung. Versucht ein Bediener durch Drücken der Betätigungshebel 23 dennoch die Freigabestellung zu erreichen, so wird lediglich eine Übergangsposition erreicht, die aber noch der Raststellung entspricht, da die Vorsprünge 21 immer noch im Eingriff mit der Gewindestange 40 bleiben.

### Bezuqszeichenliste

### Befestigungsvorrichtung und Befestigungsanordnung, insbesondere zur Befestigung eines Sanitärobjekts

- 1: Befestigungsvorrichtung
- 2: Grundkörper
- 3: Haltekörper
- 4: Fixiereinrichtung
- 5: Aufnahmekanal
- 6: Ringscheibe
- 7: Auflagebuchse
- 8: exzentrische Auflagefläche
- 9: Lagerbuchse
- 10: Werkzeugangriffsfläche
- 11: Ausschnitt
- 12: Haken
- 13: Übertragungsfläche
- 14: Haltering
- 15: Rastnase
- 16: Rastvertiefung
- 17: Federelement
- 18: Halteelement
- 19: Klipsverbindung
- 20: Haltefläche
- 21: Vorsprung
- 22: Lagerfläche
- 23: Betätigungshebel
- 24: Aussparung
- 25: Halteeinrichtung
- 26: Schnappeinrichtung
- 27: Widerlagerfläche
- 28: Hohlkonus
- 29: Hohlzylinder
- 30: Rastvorsprung
- 31: Rastrippe
- 32: Rastverbindung
- 33: Anlagebund
- 34: Flansch
- 35: Einschnitt
- 36: Hintergreifelement
- 37: Befestigungsanordnung
- 38: Sanitärobjekt
- 39: Wand
- 40: Gewindestange
- 41: Durchgangsloch
- 42: Anlagefläche des Sanitärobjekts 38
- 43: Unterlegscheibe
- 44: Mutter
- 45: Gleitfläche
- 46: erster Flächenanteil der Gleitfläche 45
- 47: zweiter Flächenanteil der Gleitfläche 45
- L: Längsachse
- E: Einführrichtung

## Patentansprüche

1. Befestigungsvorrichtung (1), insbesondere zur Befestigung eines Sanitärobjekts (38) aus Keramik, mit einem Grundkörper (2), der einen sich entlang einer Längsachse (L) erstreckenden Aufnahmekanal (5) für eine korrespondierende Gewindestange (40) aufweist, wobei im Aufnahmekanal (5) ein gegenüber dem Grundkörper (2) bewegliches Halteelement (18) angeordnet ist mit einer Haltefläche (20), die Vorsprünge (21) zum Halten der Gewindestange (40) aufweist, und wobei das Halteelement (18) derart beweglich gehalten ist, dass es zwischen einer Raststellung und einer Freigabestellung hin und her bewegbar ist, wobei das Halteelement (18) in der Raststellung das Einführen der Gewindestange (40) in einer Einführrichtung (E) ermöglicht, während es eine Bewegung der Gewindestange (40) entgegen der Einführrichtung (E) blockiert, und wobei die Freigabestellung eine Bewegung der Gewindestange (40) in Einführrichtung (E) und entgegen der Einführrichtung (E) ermöglicht, **dadurch gekennzeichnet, dass** der Grundkörper (2) eine Gleitfläche (45) für das Halteelement (18) aufweist mit einem ersten Flächenanteil (46), der ein translatorisches Gleiten des Halteelements (18) erlaubt, und einem zweiten Flächenanteil (47), der ein Gleiten des Halteelements (18) mit einer Kippbewegung erlaubt, derart, dass das Halteelement (18) durch eine kombinierte translatorische und rotatorische Bewegung gegenüber dem Grundkörper (2) zwischen der Raststellung und der Freigabestellung bewegbar ist.

2. Befestigungsvorrichtung nach dem vorstehenden Anspruch, **dadurch gekennzeichnet, dass** am Halteelement (18) ein Betätigungshebel (23) zum Betätigen des Haltelements (18) angeordnet ist, der auf einer der Haltefläche (20) abgewandten Seite des Halteelements (18) absteht.

3. Befestigungsvorrichtung nach einem der vorstehenden Ansprüche, **dadurch gekennzeichnet, dass** die Befestigungsvorrichtung (1) eine Halteeinrichtung (25) zum lösbaren Halten des Halteelements (18) in der Freigabestellung aufweist.

4. Befestigungsvorrichtung nach Anspruch 3, **dadurch gekennzeichnet, dass** die Halteeinrichtung (25) eine Schnappeinrichtung (26) ist.

5. Befestigungsvorrichtung nach einem der vorstehenden Ansprüche, **dadurch gekennzeichnet, dass** zwei bezüglich der Längsachse (L) gegenüberliegend angeordnete Halteelemente (18) im Aufnahmekanal (5) angeordnet sind.

6. Befestigungsvorrichtung nach einem der vorstehenden Ansprüche, **dadurch gekennzeichnet, dass** die Haltefläche (20) die Form eines Innengewindesegments mit gewindeförmigen Vorsprüngen (21) aufweist.

7. Befestigungsvorrichtung nach einem der vorstehenden Ansprüche, **dadurch gekennzeichnet, dass** das Halteelement (18) über ein Federelement (17) mit dem Grundkörper (2) verbunden ist.

8. Befestigungsvorrichtung Anspruch 7, **dadurch gekennzeichnet, dass** das Federelement (17) über eine Klipsverbindung (19) mit dem Grundkörper verbunden ist.

9. Befestigungsvorrichtung nach einem der vorstehenden Ansprüche, **dadurch gekennzeichnet, dass** am Grundkörper (2) eine zur Längsachse (L) im Wesentlichen senkrechte Widerlagerfläche (27) für eine Unterlegscheibe (43) angeordnet ist, die das Halteelement (18) in der Raststellung axial in Einführrichtung (E) überragt, und dass das Halteelement (18) in einer Übergangsposition zwischen der Raststellung und der Freigabestellung die Widerlagerfläche (27) axial in Einführrichtung (E) überragt.

10. Befestigungsvorrichtung nach Anspruch 9, **dadurch gekennzeichnet, dass** das Halteelement (18) die Widerlagerfläche (27) in der Freigabestellung axial in Einführrichtung (E) überragt.

11. Befestigungsvorrichtung nach einem der vorstehenden Ansprüche, **dadurch gekennzeichnet, dass** am Grundkörper (2) eine Fixiereinrichtung (4) angeordnet ist, mit der die Befestigungsvorrichtung (1) an einem Objekt, insbesondere einem Sanitärobjekt (38), mit einem Durchgangsloch (41) festlegbar ist, derart dass die Fixiereinrichtung (4) das Durchgangsloch (41) hintergreift.

12. Befestigungsvorrichtung nach einem der vorstehenden Ansprüche, **dadurch gekennzeichnet, dass** am Grundkörper (2) um den Aufnahmekanal (5) herum eine gegenüber der Längsachse (L) exzentrische Auflagefläche (8) und Werkzeugangriffsflächen (10) zum Drehen des Grundkörpers (2) um die Längsachse (L) angeordnet sind.

13. Befestigungsanordnung mit einer Befestigungsvorrichtung nach einem der vorstehenden Ansprüche, **dadurch gekennzeichnet, dass** sich durch den Aufnahmekanal (5) eine korrespondierende Gewindestange (40) erstreckt.

14. Befestigungsanordnung nach Anspruch 13, **dadurch gekennzeichnet, dass** auf der Gewindestange (40) eine Mutter (44) und eine Unterlegscheibe (43) angeordnet ist, dass die Unterlegscheibe (43) an dem Grundkörper (2) und die Mutter (44) an der Unterlegscheibe (43) anliegt und dass die Befestigungsvorrichtung (1) derart ausgebildet ist, dass die Unterlegscheibe (43) eine Bewegung des Halteelements (18) von der Raststellung in die Freigabestellung blockiert.

15. Befestigungsanordnung nach Anspruch 13 oder 14, **dadurch gekennzeichnet, dass** die Gewindstange (40) sich von einer Wand (39) erstreckt und mit der Befestigungsvorrichtung (1) ein Sanitärobjekt (38) an der Wand (39) befestigt ist.

## Claims

1. Fixing device (1), especially for fixing a sanitaryware item (38) made of ceramics, having a main body (2) which has a receiving channel (5) extending along a longitudinal axis (L) for a complementary threaded rod (40), there being arranged in the receiving channel (5) a holding element (18) which is movable relative to the main body (2) and has a holding surface (20) having projections (21) for holding the threaded rod (40), and the holding element (18) being movably mounted in such a way that it is movable back and forth between a locking position and a release position, wherein the holding element (18) in the locking position allows the insertion of the threaded rod (40) in an insertion direction (E), while it blocks movement of the threaded rod (40) in a direction opposite to the insertion direction (E), and wherein the release position allows movement of the threaded rod (40) in the insertion direction (E) and in a direction opposite to the insertion direction (E), **characterised in that** the main body (2) has a sliding surface (45) for the holding element (18) having a first surface portion (46), which allows translational sliding of the holding element (18), and a second surface portion (47) which allows sliding of the holding element (18) with a tilting movement in such a way that the holding element (18) is movable between the locking position and the release position by a combined translational and rotational movement with respect to the main body (2).

2. Fixing device according to the preceding claim, **characterised in that** on the holding element (18) there is arranged an operating lever (23) for operating the holding element (18), which operating lever projects on a side of the holding element (18) remote from the holding surface (20).

3. Fixing device according to either one of the preceding claims, **characterised in that** the fixing device (1) has a holding device (25) for releasably holding the holding element (18) in the release position.

4. Fixing device according to claim 3, **characterised in that** the holding device (25) is a snap device (26).

5. Fixing device according to any one of the preceding claims, **characterised in that** two holding elements (18) arranged opposite one another with respect to the longitudinal axis (L) are arranged in the receiving channel (5).

6. Fixing device according to any one of the preceding claims, **characterised in that** the holding surface (20) has the form of an internally threaded segment having thread-shaped projections (21).

7. Fixing device according to any one of the preceding claims, **characterised in that** the holding element (18) is connected to the main body (2) via a resilient element (17).

8. Fixing device according to claim 7, **characterised in that** the resilient element (17) is connected to the main body via a clip connection (19).

9. Fixing device according to any one of the preceding claims, **characterised in that** a counter-bearing surface (27) for a washer (43) is arranged on the main body (2), which counter-bearing surface is substantially perpendicular to the longitudinal axis (L) and projects beyond the holding element (18) in the locking position axially in the insertion direction (E); and in a transitional position between the locking position and the release position the holding element (18) projects beyond the counter-bearing surface (27) axially in the insertion direction (E).

10. Fixing device according to claim 9, **characterised in that** the holding element (18) in the release position projects beyond the counter-bearing surface (27) axially in the insertion direction (E).

11. Fixing device according to any one of the preceding claims, **characterised in that** on the main body (2) there is arranged a locating device (4) with which the fixing device (1) can be fixed in position on an article, especially on an item of sanitaryware (38), having a through-hole (41) in such a way that the locating device (4) engages behind the through-hole (41).

12. Fixing device according to any one of the preceding claims, **characterised in that** on the main body (2) there are arranged, around the receiving channel (5), a support surface (8), which is eccentric with respect to the longitudinal axis (L), and tool-application surfaces (10) for rotation of the main body (2) about the longitudinal axis (L).

13. Fixing arrangement having a fixing device according to any one of the preceding claims, **characterised in that** a complementary threaded rod (40) extends through the receiving channel (5).

14. Fixing arrangement according to claim 13, **characterised in that** a nut (44) and a washer (43) are arranged on the threaded rod (40); the washer (43) is in contact with the main body (2) and the nut (44) is in contact with the washer (43); and the fixing device (1) is constructed in such a way that the washer (43) blocks movement of the holding element (18) from the locking position into the release position.

15. Fixing arrangement according to claim 13 or 14, **characterised in that** the threaded rod (40) extends from a wall (39), and a sanitaryware item (38) is fixed to the wall (39) with the fixing device (1).

## Revendications

1. Dispositif de fixation (1) dévolu, en particulier, à la fixation d'un article sanitaire (38) en céramique, comprenant un corps de base (2) muni d'un canal de réception (5) s'étendant le long d'un axe longitudinal (L), et destiné à une tige filetée (40) complémentaire, ledit canal de réception (5) renfermant un élément de maintien (18) qui est mobile par rapport audit corps de base (2), et comporte une surface de retenue (20) dotée de protubérances (21) pour retenir ladite tige filetée (40), l'élément de maintien (18) étant retenu avec une mobilité telle qu'il puisse être animé de va-et-vient entre une position d'encliquetage et une position de libération, sachant que, dans la position d'encliquetage, ledit élément de maintien (18) permet l'insertion de la tige filetée (40) dans une direction d'insertion (E), tout en interdisant un mouvement de ladite tige filetée (40) en sens inverse de ladite direction d'insertion (E), et sachant que la position de libération autorise un mouvement de ladite tige filetée (40) dans ladite direction d'insertion (E) et en sens inverse de ladite direction d'insertion (E), **caractérisé par le fait que** le corps de base (2) est pourvu d'une surface de glissement (45) affectée à l'élément de maintien (18) et incluant une première partie de surface (46) autorisant un glissement translatoire de l'élément de maintien (18), et une seconde partie de surface (47) autorisant un glissement dudit élément de maintien (18) s'accompagnant d'un mouvement de basculement, de telle sorte que ledit élément de maintien (18) puisse être mû entre la position d'encliquetage et la position de libération, par rapport audit corps de base (2), par des mouvements combinés de translation et de rotation.

2. Dispositif de fixation selon la revendication précédente, **caractérisé par le fait qu'**un levier d'actionnement (23), implanté sur l'élément de maintien (18) en vue d'actionner ledit élément de maintien (18), fait saillie au-delà d'un côté dudit élément de maintien (18) qui est tourné à l'opposé de la surface de retenue (20).

3. Dispositif de fixation selon l'une des revendications précédentes, **caractérisé par le fait que** ledit dispositif de fixation (1) est équipé d'un système de retenue (25) affecté à la retenue libérable de l'élément de maintien (18) dans la position de libération.

4. Dispositif de fixation selon la revendication 3, **caractérisé par le fait que** le système de retenue (25) est un système (26) à déclic.

5. Dispositif de fixation selon l'une des revendications précédentes, **caractérisé par le fait que** deux éléments de maintien (18), agencés en vis-à-vis mutuel par rapport à l'axe longitudinal (L), sont logés dans le canal de réception (5).

6. Dispositif de fixation selon l'une des revendications précédentes, **caractérisé par le fait que** la surface de retenue (20) revêt la forme d'un segment à filetage intérieur, pourvu de protubérances (21) de configuration filetée.

7. Dispositif de fixation selon l'une des revendications précédentes, **caractérisé par le fait que** l'élément de maintien (18) est relié au corps de base par l'intermédiaire d'un élément élastique (17).

8. Dispositif de fixation selon la revendication 7, **caractérisé par le fait que** l'élément élastique (17) est relié au corps de base (2) par l'intermédiaire d'une liaison clipsée (19).

9. Dispositif de fixation selon l'une des revendications précédentes, **caractérisé par le fait qu'**une surface de contre-butée (27) pour l'essentiel perpendiculaire à l'axe longitudinal (L), située sur le corps de base (2), est dédiée à une rondelle de calage (43) au-delà de laquelle, dans la position d'encliquetage, l'élément de maintien (18) fait saillie axialement dans la direction d'insertion (E) ; et **par le fait que**, en un emplacement de transition entre ladite position d'encliquetage et la position de libération, ledit élément de maintien (18) fait saillie axialement, dans ladite direction d'insertion (E), au-delà de ladite surface de contre-butée (27).

10. Dispositif de fixation selon la revendication 9, **caractérisé par le fait que**, dans la position de libération, l'élément de maintien (18) fait saillie axialement au-delà de la surface de contre-butée (27) dans la direction d'insertion (E).

11. Dispositif de fixation selon l'une des revendications précédentes, **caractérisé par** la présence, sur le corps de base (2), d'un système (4) de blocage à demeure au moyen duquel ledit dispositif de fixation (1) peut être assujetti, par un trou de passage (41), à un objet et notamment à un article sanitaire (38), de façon telle que ledit système (4) de blocage à demeure emprisonne par-derrière ledit trou de passage (41).

12. Dispositif de fixation selon l'une des revendications précédentes, **caractérisé par le fait qu'**une surface d'appui (8) excentrée par rapport à l'axe longitudinal (L), et des surfaces (10) dévolues à l'engagement d'outils et réalisées pour faire tourner le corps de base (2) autour dudit axe longitudinal (L), sont situées sur ledit corps de base (2) tout autour du canal de réception (5).

13. Ensemble de fixation équipé d'un dispositif de fixation conforme à l'une des revendications précédentes, **caractérisé par le fait que** le canal de réception (5) est parcouru par une tige filetée (40) complémentaire.

14. Ensemble de fixation selon la revendication 13, **caractérisé par le fait qu'**un écrou (44) et une rondelle de calage (43) sont implantés sur la tige filetée (40) ; **par le fait que** la rondelle de calage (43) est en applique contre le corps de base (2), l'écrou (44) étant en applique contre ladite rondelle de calage (43) ; et **par le fait que** le dispositif de fixation (1) est réalisé de façon telle que ladite rondelle de calage (43) interdise un mouvement de l'élément de maintien (18), de la position d'encliquetage à la position de libération.

15. Ensemble de fixation selon la revendication 13 ou 14, **caractérisé par le fait que** la tige filetée (40) s'étend à partir d'une paroi (39), et un article sanitaire (38) est fixé à ladite paroi (39) à l'aide du dispositif de fixation (1).
